# EUROPÄISCHE PATENTSCHRIFT

(11) **EP 2 724 942 B1**
(45) Veröffentlichungstag und Bekanntmachung des Hinweises auf die Patenterteilung: **06.01.2021**
(21) Anmeldenummer: 13000321.3
(22) Anmeldetag: 23.01.2013
(51) Int. Cl.: B64F 1/305, B60D 5/00

(54) **Balg sowohl eines Übergangs zwischen zwei gelenkig miteinander verbundenen Fahrzeugen als auch einer Fluggastbrücke oder -treppe**
Bellows both for the transition between two vehicles with a jointed connection as well as an aircraft passenger boarding bridge or staircase
Soufflet ainsi que passage entre deux véhicules reliés de manière articulée ainsi qu'une passerelle ou un escalier d'embarquement

(30) Priorität: 24.10.2012 DE 202012010192 U
(43) Veröffentlichungstag der Anmeldung: 30.04.2014
(73) Patentinhaber: Hübner GmbH & Co. KG, 34123 Kassel (DE)
(72) Erfinder: Koukal, Dr. Claus-Ekkehard, 34128 Kassel (DE); Coosmann, Roswitha, 34253 Lohfelden (DE)
(74) Vertreter: Patentanwälte Walther Hinz Bayer PartGmbB

(56) Entgegenhaltungen:
- EP-A1- 2 258 568
- EP-A1- 2 404 748
- EP-A1- 2 407 322
- EP-A2- 0 233 633

## Beschreibung

Die Erfindung betrifft sowohl einen Balg sowohl für einen Übergang zwischen zwei gelenkig miteinander verbundenen Fahrzeugen als auch für eine Fluggastbrücke oder Fluggasttreppe, wobei das Balgmaterial mindestens einen Festigkeitsträger aufweist, oder wobei das Balgmaterial mindestens einen Festigkeitsträger und mindestens eine Beschichtung aus einem Elastomer aufweist.

Bälge als Teil eines Übergangs sind aus dem Stand der Technik hinreichend bekannt, so sind die Bälge beispielsweise als Falten- oder auch als Wellenbälge ausgebildet. Faltenbälge sind ziehharmonikaartig ausgebildet und weisen üblicherweise auf ihrer Außenseite im Bereich des Scheitels einen im Querschnitt U-förmigen Aluminiumrahmen auf. Diese Aluminiumrahmen dienen der Erhöhung der Steifigkeit des Balges.

Auch bei einem Wellenbalg sind im Bereich des Übergangs von einer Welle zur nächsten Welle derartige Rahmen vorgesehen, die gleichfalls der Erhöhung der Steifigkeit des Balges dienen.

Das Material zur Herstellung des Balges besteht im Einzelnen aus mindestens einer vorzugsweise allerdings aus mehreren Lagen eines Festigkeitsträgers, wobei zu beiden Seiten der Festigkeitsträger jeweils eine Schicht aus einem Elastomer vorgesehen ist. Die Beschichtung aus einem Elastomer kann beispielsweise ein TPU, ein EPDM oder auch ein Silikon sein. Insbesondere die Verwendung von Silikon hat den großen Vorteil der höheren Brand- und UV-Beständigkeit.

Es ist nun bekannt, dass je dicker die Beschichtung ist, desto schwerer der Balg wird. Das heißt, dass ein mit einer dicken Beschichtung versehener Balg sehr stark zum Durchhängen neigt, was besondere Vorkehrungen erfordert, um das Durchhängen zu vermeiden. In diesem Zusammenhang ist bereits bekannt, auf der Dachseite des Balges am Fahrzeug einen Galgen vorzusehen, an den der Balg aufgehängt ist. Eine gewisse Dicke der Elastomerbeschichtung ist allerdings erforderlich, um die Dichtigkeit des Balgstoffes zu gewährleisten. Auch das Beschichtungsverfahren selbst bedingt eine gewisse Stärke der Beschichtung.

Darüber hinaus ist bekannt, dass Bälge mit der Zeit verschmutzen. Busse und Schienenfahrzeuge werden zwar durch Waschanlagen gefahren, insbesondere bei Faltenbälgen ist es jedoch so, dass die Waschbürsten nicht parallel zu den Falten verlaufen, sondern quer dazu. Insofern wird durch eine Waschanlage herkömmlicher Art der Balg im Wesentlichen nicht gesäubert. Vielmehr muss eine Reinigung üblicherweise von Hand mithilfe eines Hochdruckreinigers vorgenommen werden. Die Verwendung von Hochdruckreinigern zur Reinigung von Bälgen ist im Übrigen auch bei den Fluggastbälgen von Fluggastbrücken oder -Treppen bekannt. Die Verwendung von Hochdruckreinigern hat aber den Nachteil, dass die Bälge unter dem Einsatz von Hochdruckreinigern schneller verschleißen.

Es hat sich allerdings gezeigt, dass Oberflächen mit Lotuseffekt dem Schmutz wenig Angriffspunkte zum Haften geben bzw. sich ansammelnder Schmutz wesentlich leichter von der Oberfläche löst.

Die Oberflächen von herkömmlich hergestellten Balgstoffen sind derart, dass diese in Abhängigkeit vom Einsatzgebiet mehr oder weniger stark verschmutzen und der Schmutz auf der Oberfläche stark haftet. Bedingt ist dies durch die Oberfläche des Beschichtungsmaterials bzw. auch durch den Festigkeitsträger, wenn dieser sich durch die Beschichtung drückt.

In diesem Zusammenhang ist aus der EP 2 258 568 A ein Balg bekannt, wobei das Balgmaterial zwischen den Rahmen mit einer Folie beklebt ist. Eine solche Folie kann gut gereinigt werden. Es hat sich allerdings herausgestellt, dass aufgrund der Bewegung des Balges die Folie nicht dauerhaft mit dem Faltenbalgmaterial verbunden bleibt.

Aus der DE 10 2010 006 939 A1 ist ein sogenannter lackierter Balg bekannt, bei dem eine Lackschicht auf das Balgmaterial aufgebracht wird. Auch die Lackschicht lässt sich gut reinigen. Auch diese Lackschicht bildet keine dauerhafte Verbindung zu dem Beschichtungsmaterial des Balges.

Die EP 2 404 748 A1 beschreibt ein Balgmaterial, wobei der Festigkeitsträger zu beiden Seiten jeweils mit einem unterschiedlichen Kautschuk beschichtet ist, Insofern ist für die eine Seite des Festigkeitsträgers ein Silikonkautschuk und für die andere Seite ein organischer Kautschuk, z. B. CSM, vorgesehen.

Die der Erfindung zugrunde liegende Aufgabe besteht demzufolge darin einen Balg eines Übergangs zwischen zwei gelenkig miteinander verbundenen Fahrzeugen zu schaffen, beispielsweise bei einem Bus oder einem Schienentransportverkehrsmittel, wobei die Oberfläche des Balgmaterials schmutzunempfindlich ist, aber dennoch dauerhaft auf dem Balgmaterial haftet.

Zur Lösung der Aufgabe wird erfindungsgemäß vorgeschlagen, dass eine Schutzschicht auf dem Festigkeitsträger oder der Elastomerschicht aufgebracht ist. Die im Druckverfahren auf eine Unterlage aufgebrachte Schicht zeichnet sich einerseits durch eine äußerst geringe Stärke auf, und andererseits durch eine dem Lotusblumeneffekt ähnliche Oberfläche. Das heißt, dass auf dem Balgmaterial eine relativ dünne Schutzschicht aufgebracht werden kann, die dem Balg eine schmutzabweisende Oberfläche vermittelt. Vorgesehen ist hierbei zum einen, die Schutzschicht unmittelbar auf das fertig hergestellte Balgmaterial aufzubringen, also auf die äußere Elastomerschicht, oder aber es besteht sogar die Möglichkeit, auf den Festigkeitsträger als Balgmaterial selbst ein oder mehrere solcher Schutzschichten anzubringen, um auf diese Weise den Festigkeitsträger dicht im Sinne von flüssigkeitsdicht, also wind- und regenabweisend auszubilden. Das heißt, der Begriff des Balgmaterials umfasst sowohl das beschichtete Gewebe als auch das unbeschichtete Gewebe. Es hat sich gezeigt, dass insbesondere bei einem Gewebe, das dicht gewebt ist, es ausreichend sein kann, wenn im Wege des Bedruckens beispielsweise im Wege des Digitaldruckes, z. B. Wege des Inkjet-Verfahrens auf den Festigkeitsträger das Beschichtungsmaterial zur Bildung der Schutzschicht aufgebracht wird. Das im Wege des Druckes aufgebrachte Material kann eine Farbe sein, oder auch jedes andere Material, das nach dem Aufbringen zwar elastisch bleibt, aber dennoch austrocknet. Als Beschichtungsmaterialien, die z. B. im Wege des Inkjet-Verfahrens aufgebracht werden können, können Materialien auf Polymerbasis Verwendung finden; insbesondere können solche Materialien auf Polymerbasis mit Nanopartikeln versetzt sein, um die Oberfläche dicht und schmutzabweisend zu gestalten. Bereits bei Auflösungen von 700 bis 5700 dpi können gegenüber Umwelteinflüssen dichte Balgmaterialien mit z. B. einem Gewebe als Basis, hergestellt werden, die zudem aufgrund der geringen Stärke der Druckschicht sehr leicht sind, und die Bälge daher nur in geringem Maße zum Durchhängen neigen.

Vorteilhafte Merkmale und Ausgestaltungen zu der Erfindung ergeben sich aus den Unteransprüchen.

Wie bereits in einem anderen Zusammenhang ausgeführt weist das Balgmaterial mindestens einen Festigkeitsträger auf, der beispielsweise ein Gewebe, Gewirk oder Gestrick sein kann.

Anhand der Zeichnungen wird die Erfindung nachstehend beispielhaft näher erläutert.
- Fig. 1: zeigt beispielhaft ein Gelenkfahrzeug, z. B. einen Bus;
- Fig. 2: zeigt schematisch einen Ausschnitt aus einem Faltenbalg in einer Ansicht im Schnitt;
- Fig. 3: zeigt die Einzelheit X aus Fig. 2, wobei die Fig. 3 ein Stück eines Balgmaterials in Explosionsdarstellung zeigt.

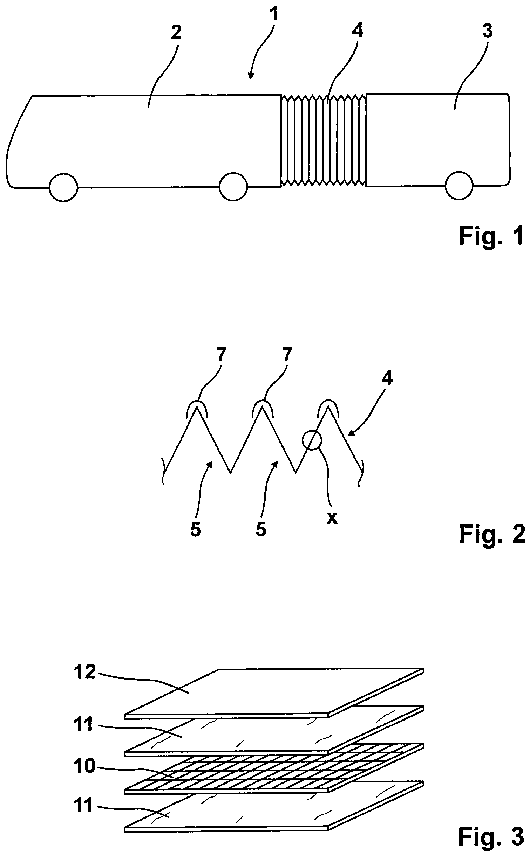

Das Gelenkfahrzeug weist das Bezugszeichen 1 auf, wobei zwischen den beiden Fahrzeugteilen 2 und 3 des Gelenkfahrzeugs ein Balg, insbesondere ein Faltenbalg 4 vorgesehen ist. Einen Ausschnitt aus dem Faltenbalg 4 zeigt Fig. 2, wobei die einzelnen Falten 5 im Bereich des äußeren Scheitels durch im Querschnitt U-förmige Balgrahmen 7 gehalten sind. Der im Querschnitt U-förmige Balgrahmen ist vorzugsweise aus Aluminium hergestellt.

Aus Fig. 3 ergibt sich perspektivisch der Ausschnitt eines Gewebes gemäß der Einzelheit X aus Fig. 2. Dargestellt ist hierbei eine Gewebelage als Festigkeitsträger mit dem Bezugszeichen 10. Der Festigkeitsträger 10 kann hierbei auf beiden Seiten z. B. mit einer Elastomerschicht 11 als Beschichtung belegt sein, die insbesondere im Wege des Kalandrierens auf dem Festigkeitsträger aufgebracht ist. Nachfolgend wird eine Schutzschicht 12 auf diese Elastomerschicht aufgedruckt, beispielsweise eine Farbschicht, die eine nach dem Lotuseffekt strukturierte Oberfläche aufweist, um so zu gewährleisten, dass Schmutzpartikel nur geringe Haftkräfte zu dem Beschichtungsmaterial des Balges aufweisen. Hierbei kann es ausreichend sein, wenn die Schutzschicht nur auf der Außenseite des Balges aufgebracht wird. Denkbar ist allerdings auch, durch das Druckverfahren die Schutzschicht auf ein dicht gewebtes Gewebe unmittelbar aufzubringen. Eine solche Vorgehensweise hat sich als besonders gewichtssparend herausgestellt. Gegebenenfalls muss die Aufbringung der Schutzschicht in mehreren Durchgängen erfolgen, um sicherzustellen, dass das Balgmaterial dicht ist.

### Bezugszeichenliste:

- 1: Gelenkfahrzeug
- 2: Fahrzeugteil
- 3: Fahrzeugteil
- 4: Faltenbalg
- 5: Falten
- 7: Balgrahmen
- 10: Festigkeitsträger
- 11: Beschichtung aus Elastomerschicht
- 12: Schutzschicht

## Patentansprüche

1. Balg sowohl für einen Übergang zwischen zwei gelenkig miteinander verbundenen Fahrzeugen als auch für eine Fluggastbrücke oder - treppe,
wobei das Balgmaterial mindestens einen Festigkeitsträger (10) aufweist und wobei eine Schutzschicht (12) auf dem Festigkeitsträger (10) aufgedruckt ist, oder wobei das Balgmaterial mindestens einen Festigkeitsträger (10) und der Festigkeitsträger mindestens eine Beschichtung (11) aus einem Elastomer aufweist und wobei eine Schutzschicht (10) auf der Elastomerbeschichtung aufgedruckt ist.

2. Balg nach Anspruch 1,
**dadurch gekennzeichnet,**
**dass** die Schutzschicht (12) im Digitaldruckverfahren, z. B. im Ink-Jet-Verfahren aufgebracht ist.

3. Balg nach einem der voranstehenden Ansprüche,
**dadurch gekennzeichnet,**
**dass** der Balg (4) mehrere hintereinander angeordnete Balgrahmen (7) aufweist, wobei durch die Balgrahmen (7) das Balgmaterial als Falten oder Wellen klemmend erfasst ist.

## Claims

1. A bellows both for a passage between two vehicles pivotally connected to one another and for an aircraft passenger bridge or aircraft passenger stairway,
wherein the bellows material has at least one reinforcement (10); and wherein a protective layer (12) is printed on the reinforcement (10);
or wherein the bellows material has at least one reinforcement (10) and the reinforcement has at least one coating (11) composed of an elastomer; and wherein a protective layer (12) is printed on the elastomer coating.

2. A bellows in accordance with claim 1,
**characterized in that**
the protective layer (12) is applied in a digital printing process, e.g. in an inkjet process.

3. A bellows in accordance with one of the preceding claims,
**characterized in that**
the bellows (4) has a plurality of bellows frames (7) arranged behind one another, with the bellows material being clampingly gripped as folds or corrugations by the bellows frame (7).

## Revendications

1. Soufflet, aussi bien pour un passage entre deux véhicules reliés de manière articulée que pour une passerelle ou un escalier d'embarquement,
dans lequel le matériau de soufflet comporte au moins une armature (10) et dans lequel une couche de protection (12) est imprimée sur l'armature (10),
ou dans lequel le matériau de soufflet comporte au moins une armature (10) et l'armature comporte au moins un revêtement (11) en élastomère et dans lequel une couche de protection (12) est imprimée sur le revêtement en élastomère.

2. Soufflet selon la revendication 1,
**caractérisé en ce que**
la couche de protection (12) est appliquée selon un procédé d'impression numérique, par exemple selon un procédé à jet d'encre.

3. Soufflet selon l'une des revendications précédentes,
**caractérisé en ce que**
le soufflet (4) comporte plusieurs cadres de soufflet (7) disposés les uns derrière les autres, le matériau de soufflet étant saisi par les cadres de soufflet (7) de manière pincée sous la forme de plis ou d'ondulations.
